# EUROPEAN PATENT APPLICATION

(11) **EP 1 306 156 A1**
(43) Date of publication of application: **02.05.2003**
(21) Application number: 00987763.0
(22) Date of filing: 27.12.2000
(51) Int. Cl.: B23K 1/00, F28F 1/02

(54) **HEAT EXCHANGER**

(30) Priority: 07.01.2000 JP 2000001854
(71) Applicant: Zexel Valeo Climate Control Corporation, Ohsato-gun, Saitama 360-0193 (JP)
(72) Inventor: KATO, Soichi, Zexel Valeo Climate Control Corp., Oosato-gun, Saitama 360-0193 (JP); AKIYAMA, Shoji, Zexel Valeo Climate Control Corp., Oosato-gun, Saitama 360-0193 (JP)
(74) Representative: HOFFMANN EITLE
(86) International application number: JP0009345
(87) International publication number: WO01049443

(57) **Abstract**

A heat exchanger provided with tubes (2) for flowing a medium and tanks (4), performs heat exchange of the medium by heat conducted to the tubes, has the tubes and the tanks assembled to form a heat exchanger core (1), and has the heat exchanger core brazed into one body, wherein the tubes (2) are formed by shaping a plate-shaped material (200), have beads (202) which are formed by bending the material, and have a sacrifice layer (210) disposed on the outer surfaces of the tubes; the heat exchanger core (1), excluding at least the tubes, is provided with a brazing material which fills recessed portions (203) on the outer surfaces of the tubes which are formed when the beads are formed; and the brazing material (R) which melts from the heat exchanger core at the time of integral brazing fills the recessed portions on the outer surfaces of the tubes. The brazing material (R) is formed to melts from the tanks, melts from fins which are separately disposed with the brazing material, or melts from a replaced brazing material which is disposed on the heat exchanger core.

## Description

### TECHNICAL FIELD

The present invention relates to a heat exchanger which is provided with tubes for flowing a medium and exchanges heat of the medium with heat conducted to the tubes.

### BACKGROUND ART

Generally, a heat exchanger such as a condenser, an evaporator, a radiator, a heater core or the like mounted on automobiles is provided with tubes for flowing a medium, fins fitted to the tubes and tanks which are connected to the tube ends and configured to perform the heat exchange of the medium with heat conducted to the tubes and the fins.

And, this type of heat exchanger is produced by assembling the tubes, fins and tanks which are made of aluminum or an aluminum alloy and heating the assembly in a furnace to be brazed into one body. A brazing material and flux necessary for the brazing are previously applied to necessary portions of the respective members before heating.

As the tubes for the heat exchanger, those produced by shaping a plate-shaped material are known. And, these tubes are provided with beads which are shaped by bending a material, and the beads serve to improve a heat-exchange property and a pressure resistance of the tubes.

Besides, this heat exchanger has a sacrifice layer disposed on the outer surfaces of the tubes, so that the corrosion resistance of the tubes can be improved.

For example, the sacrifice layer which is formed of an Al-Zn based alloy is disposed on the core material of the tubes made of an Al-Mn based alloy, and electric potential of the tube core material becomes high with respect to the sacrifice layer. As a result, the corrosion resistance of the tubes is improved by a sacrificial anode effect.

When the tubes made of the plate-shaped material as described above are provided with beads, recessed portions are formed on the outer surfaces depending on the beads.

These recessed portions on the outer surfaces of the tubes make it difficult to connect the tubes and the tanks and the recessed portions readily gather dust and water, thus,they become a cause of advancing the corrosion of the tubes.

Especially, as described in Japanese Patent Laid-Open Publication No. HEI 4-20791, there are tubes in which the mutually opposed surfaces of the material at the beads are put together to eliminate the recessed portions of the outer surfaces. But, in practice, it is very hard to completely eliminate the recessed portions, and these tubes mostly have some recessed portions remaining on the outer surfaces.

When a brazing material is clad to the surface of the material which becomes the outer surface of the tube, the brazing material melted by heating accumulates in the recessed portions, so that the recessed portions can be filled with the brazing material. But, when the brazing material for filling the recessed portions is separately disposed on the tubes, there is a disadvantages that the production cost becomes very high.

Accordingly, in view of the above problem, it is an object of the present invention to provide a heat exchanger which can efficiently secure the corrosion resistance of the tubes and can be produced at a low cost.

### DISCLOSURE OF THE INVENTION

The present invention is a heat exchanger which is provided with tubes for flowing a medium and tanks to which ends of the tubes are connected, performs heat exchange of the medium by heat conducted to the tubes, has the tubes and the tanks assembled to form a heat exchanger core, and has the heat exchanger core brazed into one body, wherein the tubes are formed by shaping a plate-shaped material, have beads which are formed by bending the material, and have a sacrifice layer disposed on the outer surfaces of the tubes; the heat exchanger core, excluding at least the tubes, is provided with a brazing material for filling recessed portions on the outer surfaces of the tubes which are formed when the beads are formed; and the recessed portions on the outer surfaces of the tubes are filled with the brazing material which melts from the heat exchanger core at the time of integral brazing.

By configuring as described above, the corrosion resistance of the tubes is efficiently secured. Specifically, the recessed portions on the outer surfaces of the tubes tend to gather dust and water and become a cause of promoting corrosion of the tubes. But, the present invention provides the sacrifice layer on the outer surfaces of the tubes and recessed portions are filled with the brazing material, which melts from the heat exchanger core, into the recessed portions. Thus, the corrosion resistance of the tubes is improved securely. When the brazing material for filling the recessed portions is provided on the tubes, the production cost becomes very high. Therefore, the brazing material for filling the recessed portions is disposed on the heat exchanger core other than the tubes to save the cost.

The brazing material to be used may be in a form such as clad on the tanks, disposed on the fins, a replaced brazing material disposed on the heat exchanger core, or the like.

### BRIEF DESCRIPTION OF THE DRAWINGS

Fig. 1 is a front view showing a heat exchanger according to an embodiment of the present invention;
Fig. 2 is a perspective view showing tubes, fins and a tank according to the embodiment of the invention;
Fig. 3 is a sectional diagram showing a tube according to the embodiment of the invention;
Fig. 4 is a sectional diagram showing a tube according to an embodiment of the invention;
Fig. 5 is a top view showing a tube and a tank according to the embodiment of the invention; and
Fig. 6 is a side view showing a tube and fins according to an embodiment of the invention.

### BEST MODE FOR CARRYING OUT THE INVENTION

Embodiments of the present invention will be described in detail with reference to the accompanying drawings.

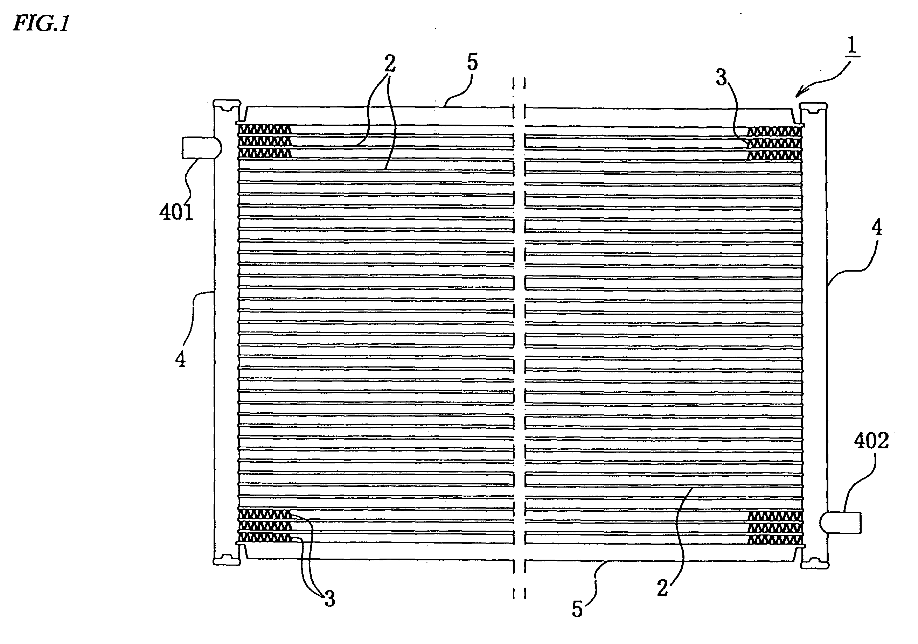

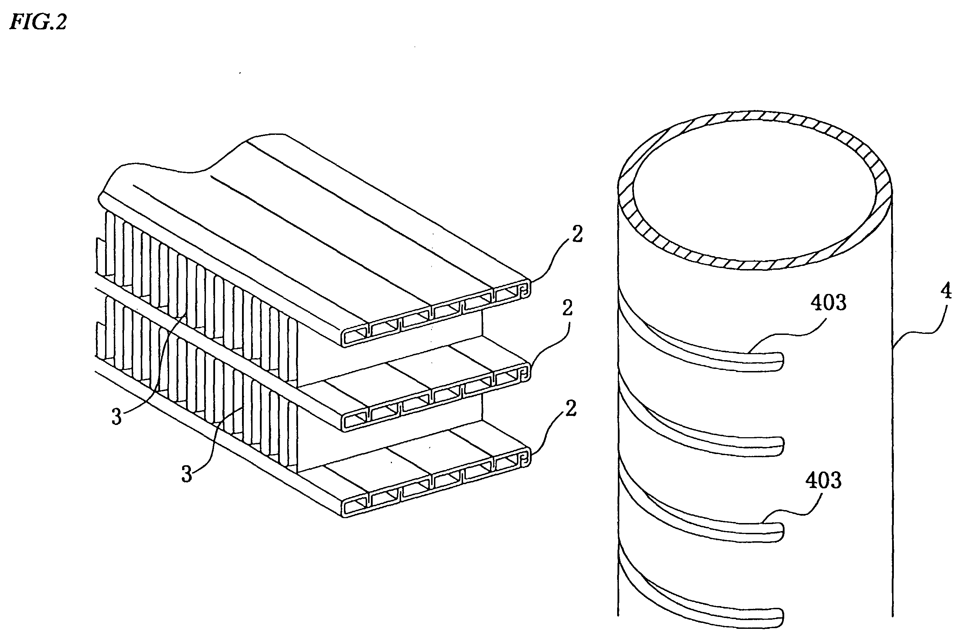

As shown in Fig. 1 and Fig. 2, a heat exchanger of this embodiment is a condenser of a refrigerating cycle for an in-car air conditioner mounted on automobiles, and has a heat exchanger core 1 configured by alternately stacking a plurality of tubes 2 and a plurality of fins 3 and connecting both ends of the tubes 2 to a pair of tanks 4.

The tanks 4 of this embodiment are cylindrical members which are provided with an inlet joint 401 and an outlet joint 402 for connecting an external pipe and holes 403 into which the ends of the tubes 2 are inserted for connection, and have their inside portioned at a prescribed width.

A medium is taken-in through the inlet joint 401, passing through the tubes 2 while heat exchanging with heat conducted to the tubes 2 and the fins 3 and discharged through the outlet joint 402.

And, side plates 5, which are reinforcing members, are respectively disposed on the top and bottom of a layer of the tubes 2 and the fins 3. Both ends of the side plates 5 are supported by the tanks 4.

The tubes 2, the fins 3, the tanks 4 and the side plates 5 are assembled by a jig, and heated in a furnace to be brazed into one body. A brazing material and flux are previously disposed at necessary portions of these members.

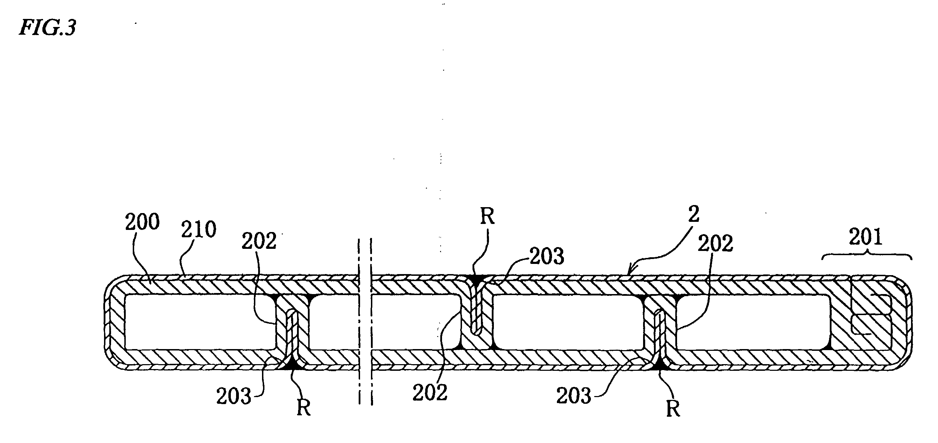

As shown in Fig. 3, the tubes 2 of this embodiment have a flat shape formed by rolling a plate-shaped material 200 made of an aluminum alloy so to have a joined portion 201 which is formed by connecting the ends in a breadth direction of the material 200 and a plurality of beads 202 which are formed by bending the material 200 inwardly, and the joined portion 201, the tops of the beads 202 and the inner opposed portions are brazed. And, a sacrifice layer 210 is disposed on the surface of the material 200 which will become the outer surfaces of the tubes 2.

The beads 202 improve the heat-exchange property and pressure resistance of the tubes 2, and the sacrifice layer 210 improves the corrosion resistance of the tubes 2.

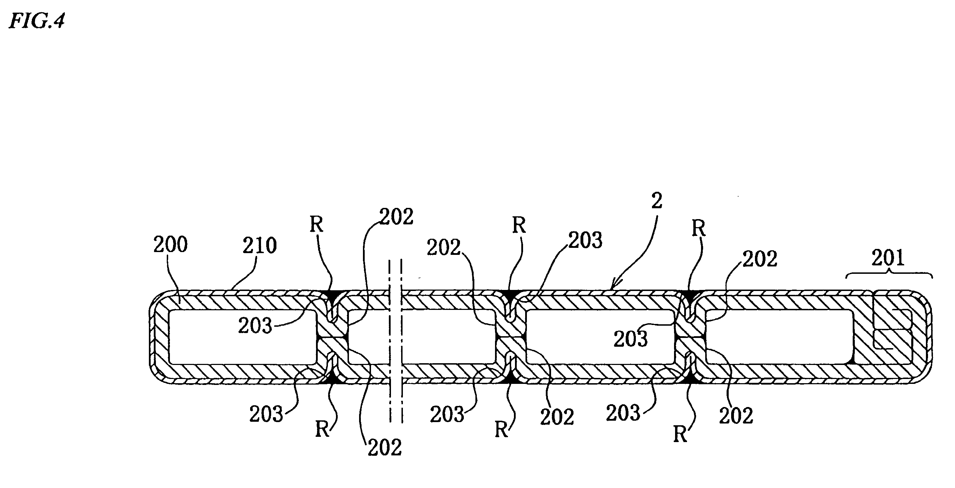

The beads 202 may be formed to braze the opposed tops mutually as shown in Fig. 4.

Besides, a brazing material R fills the recessed portions 203 on the outer surfaces of the tubes 2 formed according to the beads 202.

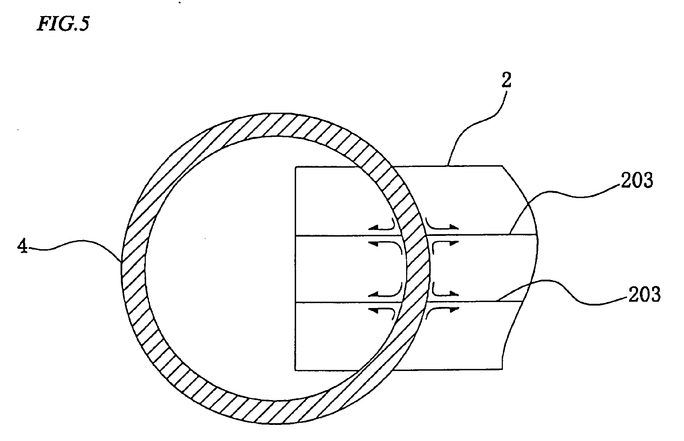

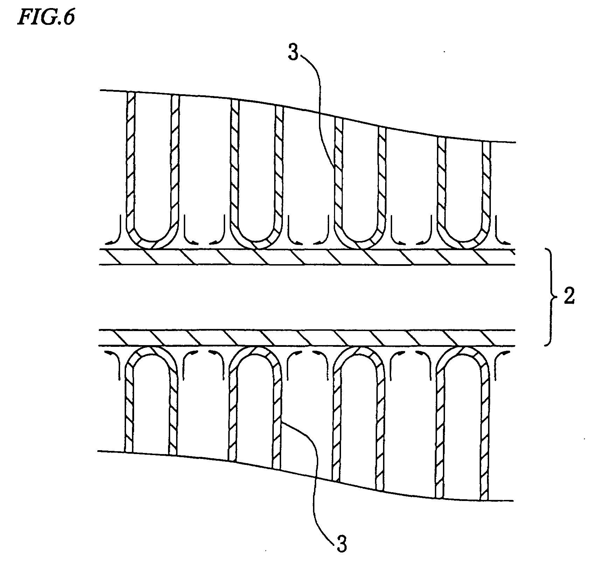

The brazing material R to fill the recessed portions 203 melts from the fins 3 and the tanks 4 at the time of brazing and enters into the recessed portions 203 as shown in Fig. 5 and Fig. 6.

Specifically, the brazing material is clad to or disposed on the fins 3, and the tubes 2 have the tops of the fins 3 brazed by brazing and the brazing material R melting from the fins 3 enters into the recessed portions 203.

Here, the replaced brazing material may be disposed between the tubes 2 and the fins 3 or between the tubes 2 and the tanks 4.

Thus, the entry of dust and water into the recessed portions 203 can be prevented by filling the recessed portions 203 with the brazing material R, and the corrosion resistance of the tubes 2 can be improved. And, the tubes 2 can be reinforced by the brazing material R, and the pressure resistance and strength of the tubes 2 can also be improved.

In this embodiment, it is configured to fill all the recessed portions 203 on the outer surfaces of the tubes 2 with the brazing material R, but the brazing material R may partly fill around the tops of the fins 3, around the holes 403 of the tanks 4, or the like.

The replaced brazing material may be disposed as the brazing material on the outer surface of the tubes 2 to fill the recessed portions 203 with the brazing material. Specifically, it may be configured to fill the recessed portions 203 with the replaced brazing material disposed on the tubes 2 in additon to the brazing material melting from the fins 3 and the tanks 4.

In the heat exchanger of this embodiment as described above, the tubes are formed by shaping the plate-shaped material and have the beads which are formed by bending the material, the sacrifice layer is disposed on the outer surfaces, and the brazing material which melts from the fins and the tanks at the time of brazing fills the recessed portions on the outer surfaces of the tubes which are formed according to the beads. Thus, the corrosion resistance of the tubes can be secured efficiently.

In other words, the recessed portions on the outer surface of the tubes tend to gather dust and water and become a cause of promoting the corrosion of the tubes. But, the present invention disposes the sacrifice layer on the outer surfaces of the tubes and the brazing material, which melts from the tanks and the fins, enters into and fills the recessed portions, so that the corrosion resistance of the tubes can be improved without fail.

And, the tubes of this embodiment are formed by shaping the plate-shaped material and have the beads which are formed by bending the material, and the sacrifice layer is disposed on the outer surfaces of the tubes. The heat exchanger is configured by disposing the replaced brazing material on the tubes at the time of brazing and the brazing material of the replaced brazing material fills the recessed portions on the outer surfaces of the tubes which are formed according to the beads. This configuration secures the corrosion resistance of the tubes efficiently.

In other words, the corrosion resistance of the tubes can be improved without fail by filling the recessed portions with the brazing material of the replaced brazing material disposed on the tubes.

In the specific examples shown in the drawings, the tubes 2 and the plurality of fins 3 are alternately stacked, and both ends of the tubes are respectively connected to the pair of tanks 4 to configure the heat exchanger core 1. But, the present invention is not limited to it and can also be applied to, for example, a heat exchanger core not using fins and a heat exchanger core of another embodiment.

### INDUSTRIAL APPLICABILITY

The present invention is a heat exchanger which can have the corrosion resistance of the tubes secured efficiently and can be suitably used as a heat exchanger for a condenser, an evaporator, a radiator, a heater core and the like mounted on automobiles.

## Claims

1. A heat exchanger which is provided with tubes for flowing a medium and tanks to which ends of the tubes are connected, performs heat exchange of the medium by heat conducted to the tubes, has the tubes and the tanks assembled to form a heat exchanger core, and has the heat exchanger core brazed into one body, wherein:
the tubes are formed by shaping a plate-shaped material, have beads which are formed by bending the material, and have a sacrifice layer disposed on the outer surfaces of the tubes;
the heat exchanger core, excluding at least the tubes, is provided with a brazing material which fills recessed portions on the outer surfaces of the tubes which are formed when the beads are formed; and
the brazing material which melts from the heat exchanger core at the time of integral brazing fills the recessed portions on the outer surfaces of the tubes.

2. The heat exchanger according to claim 1, wherein the brazing material melting from the tanks at the time of integral brazing fills the recessed portions on the outer surfaces of the tubes.

3. The heat exchanger according to claim 1, wherein the fins having the brazing material is fitted to the heat exchanger core, and the brazing material melting from the fins at the time of integral brazing fills the recessed portions on the outer surfaces of the tubes.

4. The heat exchanger according to claim 1, wherein a replaced brazing material is disposed on the heat exchanger core, and the brazing material melting from the replaced brazing material at the time of integral brazing fills the recessed portions on the outer surfaces of the tubes.

5. The heat exchanger according to claim 4, wherein the replaced brazing material is disposed on any one of the tubes, the fins and the tanks or two or more of them.
